# EUROPEAN PATENT APPLICATION

(11) **EP 4 224 426 A1**
(43) Date of publication of application: **09.08.2023**
(21) Application number: 23150290.7
(22) Date of filing: 04.01.2023
(51) Int. Cl.: G06T 7/73, G06T 7/80

(54) **OBJECT-BASED CAMERA CALIBRATION**

(30) Priority: 02.02.2022 US 202217591311
(71) Applicant: Varjo Technologies Oy, 00100 Helsinki (FI)
(72) Inventor: Peuhkurinen, Ari, Helsinki (FI); Inha, Kai, Järvenpää (FI)
(74) Representative: Moosedog Oy

(57) **Abstract**

Disclosed is a system (100) for implementing object-based camera calibration, the system comprising first camera (102) and processor(s) (104) configured to: detect occurrence of calibration event(s); obtain object information indicative of actual features of calibration objects; capture image(s); detect features of at least portion of real-world object(s) represented in image(s) (200); identify calibration object(s) that match real-world object(s), based on comparison of detected features of at least portion of real-world object(s) with actual features of calibration objects; determine camera calibration parameters, based on differences between actual features of calibration object(s) and detected features of at least portion of real-world object(s); and correct distortion(s) in the image(s) and subsequent images captured by first camera using the camera calibration parameters.

## Description

### TECHNICAL FIELD

The present disclosure relates to systems for implementing object-based camera calibrations. The present disclosure also relates to methods for implementing object-based camera calibrations.

### BACKGROUND

Since a long time, cameras have been used to capture images of real-world scenes. These captured images are used, for example, to present an extended-reality (XR) environment to a user of an XR headset, to navigate a robotic vehicle, to pick up items in a robotic manufacturing system, to estimate distances of objects from a stereo web camera, and the like. Therefore, it is necessary to have calibration information for the camera being used. For example, the camera calibration information, for a mono-camera, may be a set of five camera calibration parameters, one for the focal length of the camera, one for the pixel aspect ratio, two for the image coordinates of the principal point, and one parameter describing nonlinear lens distortion.

Typically, a camera is calibrated in a laboratory environment by presenting a subject with a known position and geometry to the camera, wherein a pose of the camera is also known. In this regard, the calibration is performed using subjects such as markers, calibration feature sheets, and the like. However, this calibration process is time consuming and expensive. Furthermore, re-calibration is typically necessary because even cameras, which have been constructed from high-quality components to meet tight tolerances, eventually change their characteristics with use. For example, this might be due to changes in temperature, dropping or jolting the camera, or changes in humidity. In order to re-calibrate the camera, an explicit calibration procedure in the laboratory environment can be repeated but this is expensive and time consuming as mentioned above. Also, this type of calibration process is not suitable for cameras employed in systems such as autonomous robots, which typically work in unconstrained environments, or for mass-market consumer applications such as XR.

Therefore, in light of the foregoing discussion, there exists a need to overcome the aforementioned drawbacks associated with camera calibration.

### SUMMARY

The present disclosure seeks to provide a system for implementing object-based camera calibration. The present disclosure also seeks to provide a method for implementing object-based camera calibration. An aim of the present disclosure is to provide a solution that overcomes at least partially the problems encountered in prior art.

In one aspect, an embodiment of the present disclosure provides a system for implementing object-based camera calibration, the system comprising a first camera and at least one processor configured to:
- detect an occurrence of at least one calibration event;
- obtain object information indicative of actual features of a plurality of calibration objects, upon said detection;
- control the first camera to capture at least one image;
- process the at least one image to detect features of at least a portion of at least one real-world object as represented in the at least one image;
- identify at least one calibration object from amongst the plurality of calibration objects that matches the at least one real-world object, based on a comparison of the detected features of at least the portion of the at least one real-world object with the actual features of the plurality of calibration objects indicated in the object information;
- determine camera calibration parameters, based on differences between actual features of the at least one calibration object and the detected features of at least the portion of the at least one real-world object; and
- utilise the camera calibration parameters to correct at least one distortion in the at least one image and subsequent images captured by the first camera.

In another aspect, an embodiment of the present disclosure provides a method for implementing object-based camera calibration, the method comprising:
- detecting an occurrence of at least one calibration event;
- obtaining object information indicative of actual features of a plurality of calibration objects, upon said detection;
- controlling a first camera to capture at least one image;
- processing the at least one image to detect features of at least a portion of at least one real-world object as represented in the at least one image;
- identifying at least one calibration object from amongst the plurality of calibration objects that matches the at least one real-world object, based on a comparison of the detected features of at least the portion of the at least one real-world object with the actual features of the plurality of calibration objects indicated in the object information;
- determining camera calibration parameters, based on differences between actual features of the at least one calibration object and the detected features of at least the portion of the at least one real-world object; and
- utilising the camera calibration parameters to correct at least one distortion in the at least one image and subsequent images captured by the first camera.

Embodiments of the present disclosure substantially eliminate or at least partially address the aforementioned problems in the prior art, and enable accurate object-based camera calibration in various real-world environments using calibration objects that are available publicly.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIGs. 1A and 1B illustrate block diagrams of a system for implementing object-based camera calibration, in accordance with different embodiments of the present disclosure;
FIG. 2A illustrates an image having at least one distortion therein, while FIG. 2B illustrates the image upon correction of the at least one distortion, in accordance with an embodiment of the present disclosure; and
FIG. 3 illustrates a flowchart depicting steps of a method for implementing object-based camera calibration, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides a system for implementing object-based camera calibration, the system comprising a first camera and at least one processor configured to:
- detect an occurrence of at least one calibration event;
- obtain object information indicative of actual features of a plurality of calibration objects, upon said detection;
- control the first camera to capture at least one image;
- process the at least one image to detect features of at least a portion of at least one real-world object as represented in the at least one image;
- identify at least one calibration object from amongst the plurality of calibration objects that matches the at least one real-world object, based on a comparison of the detected features of at least the portion of the at least one real-world object with the actual features of the plurality of calibration objects indicated in the object information;
- determine camera calibration parameters, based on differences between actual features of the at least one calibration object and the detected features of at least the portion of the at least one real-world object; and
- utilise the camera calibration parameters to correct at least one distortion in the at least one image and subsequent images captured by the first camera.

In another aspect, an embodiment of the present disclosure provides a method for implementing object-based camera calibration, the method comprising:
- detecting an occurrence of at least one calibration event;
- obtaining object information indicative of actual features of a plurality of calibration objects, upon said detection;
- controlling a first camera to capture at least one image;
- processing the at least one image to detect features of at least a portion of at least one real-world object as represented in the at least one image;
- identifying at least one calibration object from amongst the plurality of calibration objects that matches the at least one real-world object, based on a comparison of the detected features of at least the portion of the at least one real-world object with the actual features of the plurality of calibration objects indicated in the object information;
- determining camera calibration parameters, based on differences between actual features of the at least one calibration object and the detected features of at least the portion of the at least one real-world object; and
- utilising the camera calibration parameters to correct at least one distortion in the at least one image and subsequent images captured by the first camera.

The present disclosure provides the aforementioned system for implementing object-based camera calibration and the aforementioned method for implementing object-based camera calibration. The calibration is triggered automatically upon detection of the at least one calibration event. Since a large variety of calibration events are detectable by the system, the system is able to generally maintain a high quality of calibration of the first camera. Moreover, the system and method utilize calibration objects whose actual features are pre-known for calibrating the first camera. These calibration objects need not necessarily be specially-designed objects (such as markers or calibration feature sheets) for calibration purpose, but could also be well known public objects that are easily available in various real-world environments. The camera calibration parameters are determined accurately using the actual features of the at least one calibration object and the detected features of at least the portion of the at least one real-world object. The at least one distortion is corrected digitally using these camera calibration parameters, so that images captured by the first camera are eventually distortion-free.

Throughout the present disclosure, the term *"object-based camera calibration"* refers to a technique of calibrating the first camera using features of calibration objects. In particular, the object-based camera calibration estimates the camera calibration parameters of the first camera (i.e., parameters of a lens and an image sensor of the first camera). Then, these camera calibration parameters are used to correct the at least one distortion, and additionally, optionally, to measure a size of an object, determine a pose of the first camera in the real-world environment, and the like. Notably, the system may be used in several applications such as machine vision, extended-reality, robotics, navigation systems, and three-dimensional (3D) scene reconstruction.

Light rays emanating from the real-world environment pass through the lens of the first camera and are incident upon the image sensor of the first camera, thereby enabling the first camera to capture the at least one image. The at least one image could be a visible-light image, a non-visible-light image, or a depth image of the real-world environment. Optionally, the at least one camera is implemented as at least one of: a Red-Green-Blue (RGB) camera, a Red-Green-Blue-Depth (RGB-D) camera, a Red-Green-Blue-Alpha (RGB-A) camera, a monochrome camera, a ranging camera, a Light Detection and Ranging (LiDAR) camera, a Time-of-Flight (ToF) camera, a Sound Navigation and Ranging (SONAR) camera, a laser rangefinder, a stereo camera, a plenoptic camera, a depth camera, an infrared (IR) camera, a camera with a structured light sensor, an ultrasound camera. A given camera could be a two-dimensional (2D) camera (i.e., a camera that captures 2D images) or a 3D camera (i.e., a camera that captures 3D images). The at least one image captured by the first camera has at least one distortion, which is corrected by way of implementing the object-based camera calibration. Throughout the disclosure, the term *"distortion"* refers to an undesirable deviation between a representation of the real-world environment in a given image captured by the first camera and an actual appearance of the real-world environment.

Throughout the disclosure, the term *"processor"* relates to a computational element that controls an overall operation of the system. The processor is implemented as hardware, software, firmware, or a combination of these. The at least one processor is communicably coupled to the first camera wirelessly and/or in a wired manner.

A *"calibration event"* is an event whose occurrence triggers the object-based camera calibration. The at least one calibration event could be a scheduled event and/or an unscheduled (i.e., situation-based) event. The occurrence of the at least one calibration event is detected by the at least one processor upon receiving input data from at least one device, and processing the input data to identify the at least one calibration event. Herein, the at least one device may be implemented as at least one of: a sensor, the first camera, a timer, an input device. The at least one device may be housed inside or attached to the first camera or a device to which the first camera is attached. The at least one device is communicably coupled to the at least one processor.

Optionally, the at least one calibration event is at least one of:
- a predefined date and/or a predefined time of day for maintenance of the object-based camera calibration,
- detection of shock to the first camera and/or the device to which the first camera is attached,
- a location of the first camera being in proximity of a known location of a given calibration object,
- a pose of the first camera being such that a given calibration object lies in a field of view of the first camera,
- receiving an input for triggering the object-based camera calibration,
- detection of a change in an environmental condition,
- detection of a change in a lighting condition,
- detection of dis-occlusion of a given real-world object that was occluded previously.

In this regard, the object-based camera calibration may be automatically triggered on the predefined date and/or the predefined time of day as set (i.e., scheduled) by a user of the system. Moreover, the at least one processor is configured to adjust the predefined date and/or the predefined time of day, based on the user's input. As an example, a user may pre-set the predefined date and/or the predefined time of day to be 15^{th} of every month at 12 noon. In such a scenario, the object-based camera calibration will be triggered on 15^{th} of every month at 12 noon. Additionally, automatic object-based camera calibration may be done at regular intervals of time, to consistently maintain a high quality of camera calibration. Optionally, in this regard, the at least one calibration event occurs at a predefined interval of time for maintenance of the object-based camera calibration. As an example, a user may pre-set the predefined interval to be a regular interval of 30 days for maintenance of the object-based camera calibration. In such a scenario, the object-based camera calibration will be triggered automatically every 30 days.

The object-based camera calibration may also be triggered upon detection of shock to the first camera and/or the device to which the first camera is attached. Herein, the shock may be due to a fall, a bump with a hard surface, a drop, an impact, and the like. The shock may dislocate components (such as the lens, the image sensor) used in the first camera. Consequently, camera calibration is beneficially performed after the occurrence of such a calibration event. The shock may be detected by a sensor, such as a shock detector (namely, an impact monitor). Such a sensor may be housed inside the first camera or may be attached with the device to which the first camera is attached. Herein, the device to which the first camera is attached could be, but is not limited to, a head-mounted device (HMD), a teleport device, a tripod, a camera stabilizer, a gimbal, or a smartphone.

The object-based camera calibration may be triggered when the location of the first camera is in proximity of the known location of the given calibration object. Herein, the location of the given calibration object is already known (based on geo-tagged images, commonly available public data, and the like), and the geographical location of the first camera may be identified using a first tracking means (implemented, for example, as a Global Positioning System (GPS) receiver). Optionally, the location of the first camera is determined to be in proximity of the known location of the given calibration object, when a distance between said locations lies in a range of 1 centimetre to 1000000 centimetres (i.e., 10 kilometres). As an example, the given calibration object may be a barcode, a computer screen, a piece of art, or similar. In such a scenario, the location of the first camera may be quite close, for example in centimetres (such as 1 centimetre, 2 centimetres, 3 centimetres, 5 centimetres, 7 centimetres, and the like), with respect to the given calibration object. Using such a calibration event to trigger camera calibration saves battery of the first camera as the calibration event is triggered only when the first camera is in proximity of the at least one calibration object.

The object-based camera calibration may be triggered when the pose of the first camera is such that the given calibration object lies in the field of view of the first camera. The term "pose" encompasses both position and orientation. In such a scenario, the camera is positioned and/or oriented in a manner that at least one calibration object lies in the field of view of the camera and thus is likely to be represented in any image captured by the camera. The pose of the first camera can be determined using the first tracking means (implemented, for example, as a radio-based tracking system, a magnetism-based tracking system, an accelerometer, a gyroscope, an Inertial Measurement Unit (IMU), a Timing and Inertial Measurement Unit (TIMU), and the like). Using such a calibration event to trigger camera calibration saves battery of the first camera as the calibration event is triggered only when the at least one calibration object is in the field of view of the first camera.

The object-based camera calibration may be triggered upon receiving the input. The user may trigger such calibration by providing the input as required (for example, when the user identifies the captured images to have a poor visual quality or misalignment, or similar). The input may be provided using the input device. Herein, the input device may be a button, a touch screen, a microphone, and the like.

The object-based camera calibration may be triggered upon detection of a change in the environmental condition. Herein, *"detection of change"* is with respect to a previous calibration of the first camera. Herein, *"environmental condition"* refers to, but is not limited to, humidity and temperature. Upon the change in humidity and/or temperature, images captured by the first camera could be different than images captured previously (i.e., prior to said change) by the first camera. Moreover, detection of the change in lighting condition may trigger object-based camera calibration. As an example, when the first camera is previously calibrated in daytime, it may need to be calibrated again when being used during night time. The change in lighting from bright (daytime) to low (night time or dim artificial lighting) may trigger the object-based camera calibration, because low lighting negatively affects the visibility of objects. It will be appreciated that the object information is beneficially available for different types of conditions, and calibration can be triggered differently, for different conditions, in the above manner.

The object-based camera calibration may be triggered upon detection of dis-occlusion of the given real-world object that was occluded previously. Dis-occlusion may occur upon movement of the given real-world object, movement of another real-world object occluding the given real-world object, or similar. Optionally, the at least one processor is configured to process a previous image captured by the first camera and a current image captured by the first camera to detect the disocclusion of the given real-world object, wherein dis-occlusion is detected when the given real-world object is fully or partly visible in the current image but not in the previous image.

Furthermore, the *"object information"* refers to information pertaining to the plurality of calibration objects. In particular, the object information indicates the actual features of the plurality of calibration objects, and these actual features are used for object-based camera calibration. Notably, the actual features are used by the at least one processor to recognize calibration object(s) in captured image(s) and in determining the camera calibration parameters. Apart from actual features of a given calibration object, the object information optionally comprises at least one reference image representing the given calibration object or a portion thereof. In such a case, the at least one reference image may be a geo-tagged image. Thus, a geolocation of the given calibration object may also be available in the object information. Additionally, optionally, the object information comprises public data available for the given calibration object or the portion thereof.

Optionally, the system further comprises a data repository communicably coupled to the at least one processor, the data repository having pre-stored therein the object information, and wherein when obtaining the object information, the at least one processor is configured to access the object information from the data repository. The data repository could be implemented as a cloud-based memory, a memory of at least one server, a memory associated with the at least one processor, or similar. Herein, the term *"data repository"* refers to hardware, software, firmware, or a combination of these for storing a given information in an organized (namely, structured) manner, thereby, allowing for easy storage, access (namely, retrieval), updating and analysis of the given information. The at least one processor retrieves the object information from the data repository during the object-based camera calibration or as and when required (i.e., upon detection of the occurrence of the at least one calibration event). Notably, the pre-stored object information may be collected by at least one of: the first camera, at least one image capturing device, at least one user device. Herein, a user device could be a camera, a mobile phone with image capturing functionality, and the like. It will be appreciated that when multiple cameras (including the first camera) are to be calibrated, the first camera can be calibrated using the system. Then, other cameras can be calibrated based on the calibration of the first camera. This is particularly beneficial when these multiple cameras are of the same type.

Optionally, the object information may be pre-processed before storing in the data repository. Herein, the pre-processing may be performed by the at least one processor or by an external processor. The external processor could be a part of the at least one user device, at least one server (such as a cloud-based server), and the like. This pre-processing could be performed using an image processing algorithm, a machine learning algorithm, and the like. Such pre-processing algorithms may be used to detect and extract features from images captured by the at least one image capturing device and/or the at least one user device. Notably, such pre-processing algorithms are well known in the art.

Throughout the disclosure, the term *"calibration object"* refers to an object having well-defined and known features that are to be used for camera calibration. Additionally, the plurality of calibration objects used by the system are such that there is no need of using specially designed markers or calibration feature sheets while performing calibration. The plurality of calibration objects may be well-known and distinctive objects that are easily available in most real-world environments, so that object-based camera calibration can be conveniently and accurately performed anywhere using the system. Examples of calibration objects include, but are not limited to, public objects (such as monuments, advertisement hoardings, and the like), commonly-used objects (such as soft drink cans, gadgets, and the like), and specially-designed objects (such as objects bearing certain patterns, designs, codes, paintings, picture frames, barcodes, and the like).

The at least one image captured by the first camera represents the at least one real-world object. In particular, the at least one image represents features of the at least one real-world object or its portion. The at least one real-world object is present in the real-world environment whereat the first camera is present.

Optionally, a given feature of a given object or its portion is one of: an edge, a corner, a blob, a ridge, a shape, a dimension, a colour of the given object or its portion. Herein, the term *"given object"* encompasses calibration object, real object, or both of these. It will be appreciated that such features are distinctive and therefore can be used to accurately determine the camera calibration parameters based on how these features are represented in the at least one image captured by the first camera as compared to how these features are indicated in the object information.

Optionally, when processing the at least one image to detect the features of at least the portion of at least one real-world object as represented in the at least one image, the at least one processor employs at least one feature extraction algorithm. Examples of the at least one feature extraction algorithm include an edge-detection algorithm (for example, such as Canny edge detector, Deriche edge detector and the like), a corner-detection algorithm (for example, such as Harris & Stephens corner detector, Shi-Tomasi corner detector, Features from Accelerated Segment Test (FAST) corner detector and the like), a blob-detection algorithm (for example, such as Laplacian of Gaussian (LoG)-based blob detector, Difference of Gaussians (DoG)-based blob detector, Maximally Stable Extremal Regions (MSER) blob detector, and the like), a feature descriptor algorithm (for example, such as Binary Robust Independent Elementary Features (BRIEF), Gradient Location and Orientation Histogram (GLOH), Histogram of Oriented Gradients (HOG), and the like), a feature detector algorithm (for example, such as the SIFT, the SURF, Oriented FAST and rotated BRIEF (ORB), and the like), a shape detection algorithm (for example, such as Hough transform), a photogrammetry algorithm, a colour detection algorithm (for example, such as KMeans algorithm, K-Nearest Neighbors Classification Algorithm), and the like.

Next, the at least one processor employs at least one image processing algorithm to compare the detected features of at least the portion of the at least one real-world object with the actual features of the plurality of calibration objects indicated in the object information. Such image processing algorithms are well known in the art. Upon said comparison, a given calibration object is determined to match the at least one real-world object when actual features of the given calibration object are similar to the detected features of at least the portion of the at least one real-world object. It will be appreciated that there could be differences between the actual features of the at least one calibration object (as indicated in the object information) and the detected features of at least the portion of the at least one real-world object since the first camera is not calibrated or is poorly calibrated at a time of capturing the at least one image. Due to this, one or more of the actual features of the at least one calibration object would appear to be distorted in the at least one image. The camera calibration parameters are determined based on said differences since said differences are indicative of an extent of distortion produced in the first camera when capturing the at least one image.

The term *"camera calibration parameters"* refers to characteristics that define how a given camera captures images. Camera calibration parameters are typically parameters of a lens and an image sensor of the given camera. The camera calibration parameters describe a mathematical relationship between 3D coordinates of a point in the real-world environment from which light rays travel towards the first camera and two-dimensional (2D) coordinates of a projection of the point onto an image plane of the first camera. Optionally, when determining the camera calibration parameters, the at least one processor employs at least one mathematical formula. In this regard, a camera intrinsic matrix may be determined, homography between a model plane and its image may be determined, and said homography may be used to determine the camera calibration parameters. Such mathematical formulas are well known in the art.

Optionally, the camera calibration parameters are at least one of: intrinsic parameters, extrinsic parameters, and wherein the intrinsic parameters comprise at least one of: a focal length, an optical centre, a skew coefficient, an image sensor format, a principal point of the first camera, and wherein the extrinsic parameters comprise at least one of: a position, an orientation of the first camera in the real-world environment. The intrinsic parameters map (i.e., link) pixel coordinates of a point in an image with its corresponding camera coordinates in an image plane of the camera (i.e., a reference frame of the camera), whereas the extrinsic parameters map coordinates of real-world points to their corresponding camera coordinates in the image plane. Notably, the focal length of the lens is a distance between the lens and the image sensor when a region of interest in the real-world environment is in focus, and is usually expressed in units of length. Moreover, the optical centre of the lens is a point which lies on an optical axis (i.e., a principal axis) of the first camera through which the light rays pass without any deflection. Furthermore, the skew coefficient is a measure of distortion (in a given direction) in shape of a pixel in the image sensor, the pixel not being a perfect square. The skew coefficient defines an angle between horizontal and vertical pixel axes. Notably, the image sensor format pertains to a shape and size of the image sensor. The principal point is an origin of the image plane in relation to a centre of the image plane. The position and the orientation of the first camera in the real-world environment may also be expressed in terms of translation and rotation of the first camera with respect to an origin of the real-world environment.

The camera calibration parameters are indicative of the at least one distortion introduced by the at least one camera and are therefore used to correct the at least one distortion. Optionally, when utilising the camera calibration parameters to correct the at least one distortion in the at least one image and the subsequent images captured by the first camera, the at least one processor is configured to employ at least one image processing algorithm, wherein the at least one image processing algorithm is at least one of: an image reprojection algorithm, a colour correction algorithm, an inpainting algorithm. For example, an image reprojection algorithm employing Brown-Conrady model may be employed to correct radial distortion and tangential distortion in the at least one image. Notably, such image processing algorithms are well known in the art.

Optionally, the at least one distortion is at least one of: a radial distortion, a tangential distortion, a camera optical path distortion, a colour distortion. Distortion is a change in a spatial relationship between parts of an image representing a real-world object with respect to the real-world object itself. Herein, *"radial distortion"* refers to a distortion that occurs due to unequal bending of light rays from different regions of the lens. Radial distortion bends straight lines of an object into curved lines, thereby significantly lowering image quality. Radial distortions are classified as either barrel distortions or pincushion distortions. In barrel distortion, image magnification decreases with increase in angular distance from the optical axis. Captured content of the at least one image seems to be mapped around a sphere (or barrel). In pincushion distortion, image magnification increases with increase in the angular distance from the optical axis. The visible effect is that lines that do not go through a centre of the at least one image are bent inwards, towards the centre of the at least one image, like a pincushion. Furthermore, *"tangential distortion"* occurs when the lens and the image plane are not parallel. In other words, tangential distortion occurs when the lens is at an angle with respect to the image sensor. An image suffering from tangential distortion seems to be tilted and stretched. Moreover, *"camera optical path distortion"* refers to the distortion suffered by light as it travels along the optical path within the camera. An actual optical path may differ from a correct optical path due to mechanical changes in lens setup inside the first camera, changes in optical elements, and similar. Next, the term *"colour distortion"* refers to an undesirable change in colour of a given pixel in the image with respect to an actual colour of a point/surface of the real-world object. For example, colour distortion may be determined to occur when a purple colour of a surface of the real-world object appears to have a fuchsia colour in the image.

Optionally, the system further comprises the first tracking means, wherein when obtaining the object information, the at least one processor is configured to process first tracking data, collected by the first tracking means, to determine a location of the first camera in a real-world environment, the object information being obtained based on the location of the first camera, and wherein the plurality of calibration objects are associated with their corresponding locations in the real-world environment. In this regard, only object information for those calibration object(s) whose location(s) are in a proximity of the location of the first camera is obtained, since only such calibration object(s) can be captured in the at least one image by the first camera. Object information for other calibration objects, whose locations are not in proximity of the location of the first camera, is not obtained. Herein, a given location can be a 2D location or a 3D location. For example, when a tracking means such as GPS is used, the given location is a 2D location. On the other hand, when a tracking means such as an outside-in tracking system is used, the given location is a 3D location. For example, the real-world environment may be a shopping mall having several floors. In such a case, calibration objects associated with one floor may be different from calibration objects associated with another floor, even when their GPS location is the same. In such a case, the object information that is obtained is indicative of actual features of only those calibration object(s) that are located on the same floor and in proximity of the first camera.

Optionally, the system further comprises a plurality of user devices, each user device comprising a second tracking means, a second camera, and a processor coupled in communication with the data repository, wherein the processor of said user device is configured to:
- control the second camera to capture a plurality of reference images representing the plurality of calibration objects;
- process second tracking data, collected by the second tracking means, to determine locations of the second camera in the real-world environment from which the plurality of reference images are captured; and
- associate the plurality of calibration objects with corresponding locations in the real-world environment, based at least on the locations of the second camera.

Optionally, the processor of the user device is configured to associate the plurality of objects with their corresponding locations in the real-world environment, based also on orientations of the second camera from which the plurality of reference images are captured. Optionally, in this regard, the processor of the user device is configured to process the second tracking data, to determine the orientations of the second camera from which the plurality of reference images are captured are determined.

In some implementations, a location associated with a given calibration object is same as a location of the second camera from which a reference image representing the given calibration object is captured. In other implementations, wherein the second camera is a depth camera or the user device further comprises a depth sensor, a location associated with a given calibration object is determined based on a location of the second camera from which a reference image representing the given calibration object is captured and an optical depth between the second camera and the calibration object. The depth camera may be implemented as a Red-Green-Blue-Depth (RGB-D) camera, a stereo camera, a ranging camera, a Light Detection and Ranging (LiDAR) camera, a flash LiDAR camera, a Time-of-Flight (ToF) camera, a Sound Navigation and Ranging (SONAR) camera, a laser rangefinder, a plenoptic camera, an infrared camera, and the like. The depth sensor may be implemented as a light-based depth sensor, a sound-based depth sensor, or similar.

Optionally, a given tracking means (the first tracking means and/or the second tracking means) could be implemented as an inside-out tracking system, an outside-in tracking system, or as a combination thereof. The given tracking means could be implemented as at least one of: an optics-based tracking system (which utilizes, for example, infrared beacons and detectors, infrared cameras, visible-light cameras, detectable objects and detectors, and the like), an acoustics-based tracking system, a radio-based tracking system, a magnetism-based tracking system, an accelerometer, a gyroscope, an Inertial Measurement Unit (IMU), a Timing and Inertial Measurement Unit (TIMU), a Global Navigation Satellite System (GNSS), a Global Positioning System (GPS) tracking system. A given tracking data may be in form of images, IMU/TIMU values, motion sensor data values, magnetic field strength values, or similar. Correspondingly, requisite data processing algorithm(s) is/are employed to process the given tracking data.

Moreover, optionally, the at least one processor is further configured to:
- utilize the camera calibration parameters to determine at least one calibration improvement measure that, when executed, would improve the object-based camera calibration, wherein the at least one calibration improvement measure comprises at least one of: addition of a new calibration event, removal of a calibration event, modification of a calibration event, updating of the actual features of the plurality of calibration objects; and
- generate a recommendation indicative of the at least one calibration improvement measure.

Optionally, in this regard, the camera calibration parameters are compared with an existing camera calibration model to determine a quality of the object-based camera calibration. This comparison can be performed one or more times. The quality of the object-based camera calibration would be high if distortion observed in images captured upon calibration is nil or minimal. The quality of the object-based camera calibration may be determined as an absolute measure (i.e., an absolute value) or as a relative measure (i.e., a comparative measure with respect to a previously-determined quality). Furthermore, a given calibration improvement measure is one which when implemented, improves a quality of the object-based camera calibration (i.e., reduces distortion).

The present disclosure also relates to the method as described above. Various embodiments and variants disclosed above, with respect to the aforementioned first aspect, apply *mutatis mutandis* to the method.

Optionally, in the method, the at least one calibration event is at least one of:
- a predefined date and/or a predefined time of day for maintenance of the object-based camera calibration,
- detection of shock to the first camera and/or a device to which the first camera is attached,
- a location of the first camera being in proximity of a known location of a given calibration object,
- a pose of the first camera being such that a given calibration object lies in a field of view of the first camera,
- receiving an input for triggering the object-based camera calibration,
- detection of a change in an environmental condition,
- detection of a change in a lighting condition,
- detection of dis-occlusion of a given real-world object that was occluded previously.

Optionally, in the method, the at least one distortion is at least one of: a radial distortion, a tangential distortion, a camera optical path distortion, a colour distortion.

Optionally, in the method, the camera calibration parameters are at least one of: intrinsic parameters, extrinsic parameters, and wherein the intrinsic parameters comprise at least one of: a focal length, an optical centre, a skew coefficient, an image sensor format, a principal point of the first camera, and wherein the extrinsic parameters comprise at least one of: a position, an orientation of the first camera in a real-world environment.

Optionally, in the method, a given feature of a given object or its portion is one of: an edge, a corner, a blob, a ridge, a shape, a dimension, a colour of the given object or its portion.

Optionally, in the method, the step of obtaining the object information comprises accessing the object information from a data repository, the data repository having the object information pre-stored therein.

Optionally, in the method, the step of obtaining the object information comprises processing first tracking data, collected by a first tracking means, to determine a location of the first camera in a real-world environment, the object information being obtained based on the location of the first camera, and wherein the plurality of calibration objects are associated with their corresponding locations in the real-world environment.

### DETAILED DESCRIPTION OF THE DRAWINGS

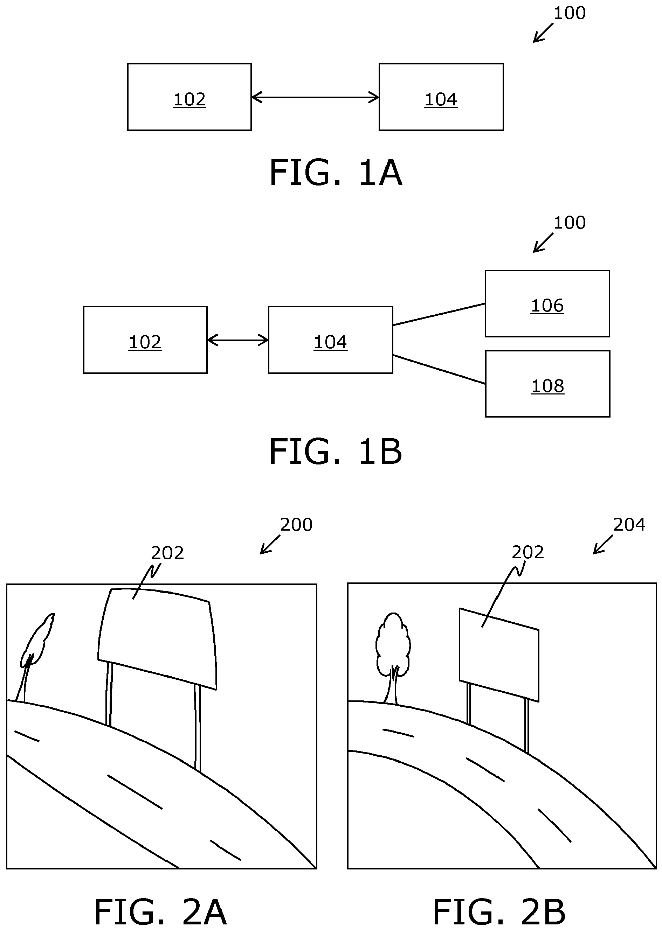

Referring to FIGs. 1A and 1B, illustrated are block diagrams of a system **100** for implementing object-based camera calibration, in accordance with different embodiments of the present disclosure. The system comprises a first camera **102** and at least one processor (depicted as a processor **104).** The processor **104** is communicably coupled to the first camera **102.** In FIG. 1B, optionally, the system **100** further comprises a data repository **106** and a first tracking means **108,** wherein the data repository **106** and the first tracking means **108** are communicably coupled to the processor **104.**

Referring to FIGs. 2A and 2B, FIG. 2A illustrates an image **200** having at least one distortion therein, while FIG. 2B illustrates the image **200** upon correction of the at least one distortion, in accordance with an embodiment of the present disclosure. With reference to FIG. 2A, there is shown the image **200** captured by a first camera (not shown). At least one processor (not shown) processes the image **200** to detect features of at least one real-world object (depicted as a billboard **202)** as represented in the image **200.** Additionally, the at least one processor identifies at least one calibration object (i.e., a "reference" billboard) from amongst a plurality of calibration objects that matches the billboard **202,** based on a comparison of the detected features of the billboard **202** with actual features of the plurality of calibration objects indicated in object information. The at least one processor further determines camera calibration parameters, based on differences between the actual features of the at least one calibration object and the detected features of the billboard **202.** Next, the at least one processor utilises the camera calibration parameters to correct the at least one distortion (depicted as a barrel distortion) in the image **200.** With reference to FIG. 2B, there is shown another image **204** that is generated after correction. The image **204** is free from the at least one distortion.

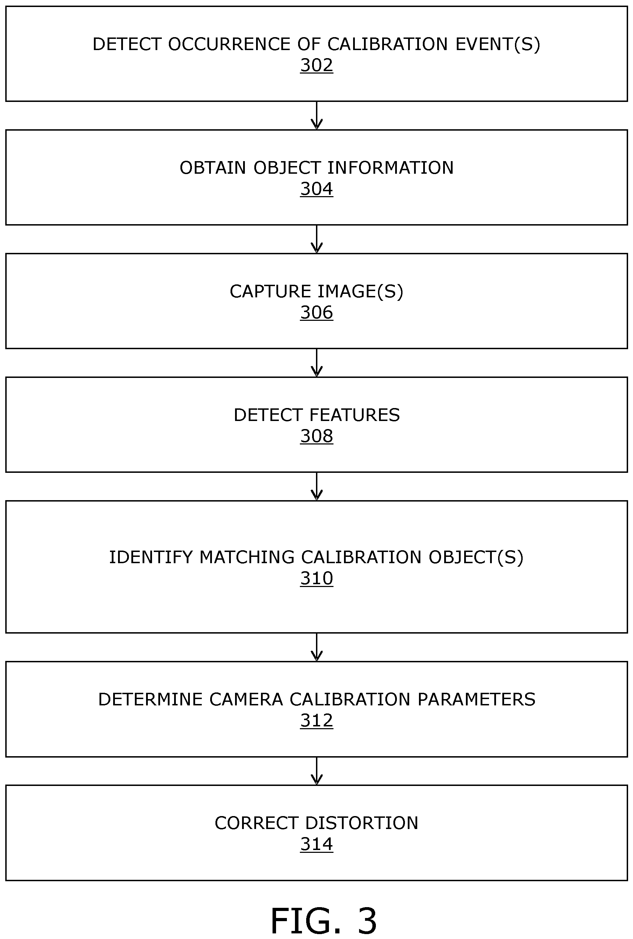

Referring to FIG. 3, illustrated is a flowchart depicting steps of a method for implementing object-based camera calibration, in accordance with an embodiment of the present disclosure. At a step **302,** an occurrence of at least one calibration event is detected. At a step **304,** object information indicative of actual features of a plurality of calibration objects is obtained, upon said detection. At a step **306,** a first camera is controlled to capture at least one image. At a step **308,** the at least one image is processed to detect features of at least a portion of at least one real-world object as represented in the at least one image. At a step **310,** at least one calibration object is identified from amongst the plurality of calibration objects that matches the at least one real-world object. The identification is based on a comparison of the detected features of at least the portion of the at least one real-world object with the actual features of the plurality of calibration objects indicated in the object information. At a step **312,** camera calibration parameters are determined, based on differences between actual features of the at least one calibration object and the detected features of at least the portion of the at least one real-world object. At a step **314,** the camera calibration parameters are utilised to correct at least one distortion in the at least one image and subsequent images captured by the first camera.

The aforementioned steps are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) for implementing object-based camera calibration, the system comprising a first camera (102) and at least one processor (104) configured to:
- detect an occurrence of at least one calibration event;
- obtain object information indicative of actual features of a plurality of calibration objects, upon said detection;
- control the first camera to capture at least one image (200);
- process the at least one image to detect features of at least a portion of at least one real-world object as represented in the at least one image;
- identify at least one calibration object from amongst the plurality of calibration objects that matches the at least one real-world object, based on a comparison of the detected features of at least the portion of the at least one real-world object with the actual features of the plurality of calibration objects indicated in the object information;
- determine camera calibration parameters, based on differences between actual features of the at least one calibration object and the detected features of at least the portion of the at least one real-world object; and
- utilise the camera calibration parameters to correct at least one distortion in the at least one image and subsequent images captured by the first camera.

2. The system (100) of claim 1, wherein the at least one calibration event is at least one of:
- a predefined date and/or a predefined time of day for maintenance of the object-based camera calibration,
- detection of shock to the first camera (102) and/or a device to which the first camera is attached,
- a location of the first camera being in proximity of a known location of a given calibration object,
- a pose of the first camera being such that a given calibration object lies in a field of view of the first camera,
- receiving an input for triggering the object-based camera calibration,
- detection of a change in an environmental condition,
- detection of a change in a lighting condition,
- detection of dis-occlusion of a given real-world object that was occluded previously.

3. The system (100) of claim 1 or 2, wherein the at least one distortion is at least one of: a radial distortion, a tangential distortion, a camera optical path distortion, a colour distortion.

4. The system (100) of any of the preceding claims, wherein the camera calibration parameters are at least one of: intrinsic parameters, extrinsic parameters, and wherein the intrinsic parameters comprise at least one of: a focal length, an optical centre, a skew coefficient, an image sensor format, a principal point of the first camera (102), and wherein the extrinsic parameters comprise at least one of: a position, an orientation of the first camera in a real-world environment.

5. The system (100) of any of the preceding claims, wherein a given feature of a given object or its portion is one of: an edge, a corner, a blob, a ridge, a shape, a dimension, a colour of the given object or its portion.

6. The system (100) of any of the preceding claims, wherein the system further comprises a data repository (106) communicably coupled to the at least one processor (104), the data repository having pre-stored therein the object information, and wherein when obtaining the object information, the at least one processor is configured to access the object information from the data repository.

7. The system (100) of any of the preceding claims, further comprising a first tracking means (108), wherein when obtaining the object information, the at least one processor (104) is configured to process first tracking data, collected by the first tracking means, to determine a location of the first camera (102) in a real-world environment, the object information being obtained based on the location of the first camera, and wherein the plurality of calibration objects are associated with their corresponding locations in the real-world environment.

8. A method for implementing object-based camera calibration, the method comprising:
- detecting an occurrence of at least one calibration event;
- obtaining object information indicative of actual features of a plurality of calibration objects, upon said detection;
- controlling a first camera (102) to capture at least one image (200);
- processing the at least one image to detect features of at least a portion of at least one real-world object as represented in the at least one image;
- identifying at least one calibration object from amongst the plurality of calibration objects that matches the at least one real-world object, based on a comparison of the detected features of at least the portion of the at least one real-world object with the actual features of the plurality of calibration objects indicated in the object information;
- determining camera calibration parameters, based on differences between actual features of the at least one calibration object and the detected features of at least the portion of the at least one real-world object; and
- utilising the camera calibration parameters to correct at least one distortion in the at least one image and subsequent images captured by the first camera.

9. The method of claim 8, wherein the at least one calibration event is at least one of:
- a predefined date and/or a predefined time of day for maintenance of the object-based camera calibration,
- detection of shock to the first camera (102) and/or a device to which the first camera is attached,
- a location of the first camera being in proximity of a known location of a given calibration object,
- a pose of the first camera being such that a given calibration object lies in a field of view of the first camera,
- receiving an input for triggering the object-based camera calibration,
- detection of a change in an environmental condition,
- detection of a change in a lighting condition,
- detection of dis-occlusion of a given real-world object that was occluded previously.

10. The method of claim 8 or 9, wherein the at least one distortion is at least one of: a radial distortion, a tangential distortion, a camera optical path distortion, a colour distortion.

11. The method of any of claims 8-10, wherein the camera calibration parameters are at least one of: intrinsic parameters, extrinsic parameters, and wherein the intrinsic parameters comprise at least one of: a focal length, an optical centre, a skew coefficient, an image sensor format, a principal point of the first camera (102), and wherein the extrinsic parameters comprise at least one of: a position, an orientation of the first camera in a real-world environment.

12. The method of any of claims 8-11, wherein a given feature of a given object or its portion is one of: an edge, a corner, a blob, a ridge, a shape, a dimension, a colour of the given object or its portion.

13. The method of any of claims 8-12, wherein the step of obtaining the object information comprises accessing the object information from a data repository (106), the data repository having the object information pre-stored therein.

14. The method of any of claims 8-13, wherein the step of obtaining the object information comprises processing first tracking data, collected by a first tracking means (108), to determine a location of the first camera (102) in a real-world environment, the object information being obtained based on the location of the first camera, and wherein the plurality of calibration objects are associated with their corresponding locations in the real-world environment.
